Europäisches Patentamt

European Patent Office

Office européen des brevets

(19)

(11) Veröffentlichungsnummer: **0 241 777 B1**

(12) **EUROPÄISCHE PATENTSCHRIFT**

(45) Veröffentlichungstag der Patentschrift: **08.05.91**

(51) Int. Cl.⁵: **H04J 3/07**

(21) Anmeldenummer: **87104449.1**

(22) Anmeldetag: **25.03.87**

(54) **Demultiplexstufe eines Digitalsignal-Übertragungsgerätes.**

(30) Priorität: **14.04.86 DE 3612493**

(43) Veröffentlichungstag der Anmeldung:
**21.10.87 Patentblatt 87/43**

(45) Bekanntmachung des Hinweises auf die
Patenterteilung:
**08.05.91 Patentblatt 91/19**

(84) Benannte Vertragsstaaten:
**AT BE CH DE FR GB IT LI NL SE**

(56) Entgegenhaltungen:
**DE-A- 2 839 893**
**DE-B- 2 622 107**
**FR-A- 2 157 581**

(73) Patentinhaber: **Siemens Aktiengesellschaft**
**Wittelsbacherplatz 2**
**W-8000 München 2(DE)**

(72) Erfinder: **Burger, Erich, Dipl.-Ing. (FH)**
**Kerschensteinerstrasse 140**
**W-8034 Germering(DE)**
Erfinder: **Müller, Martin, Dipl.-Ing.**
**Knappertsbuschstrasse 18/V**
**W-8000 München 81(DE)**
Erfinder: **Schwierz, Theodor, Dipl.-Ing.**
**Riedweg 11**
**W-8891 Klingen(DE)**

## Beschreibung

Die Erfindung betrifft ein Verfahren gemäß dem Oberbegriff des Patentanspruches 1.

Ein solches Verfahren ist aus der DE-A-2 839 893 bekannt.

Ein Digitalsignal-Übertragungsgerät (siehe Zeitschrift Frequenz, 32 (1978), 10 Seiten 281-287, Positiv-Null-Negativ-Stopftechnik für die Multiplex-Übertragung plesiochroner Datensignale) faßt mehrere Digitalsignale einer Hierarchiestufe zu einem Digitalsignal der nächst höheren Hierarchiestufe, einem sogenannten Summensignal zusammen. Die Bitraten und die Pulsrahmen der Digitalsignale der einzelnen Hierarchiestufen sind in internationalen Vereinbarungen festgelegt. In allen Ebenen wird hierbei plesiochron übertragen, d.h. die Bitraten der Digitalsignale können von ihrem Nominalwert maximal um einen Toleranzwert nach oben oder nach unten abweichen. Die relativen Toleranzen sind ebenfalls festgelegt. Ein n-Kanal-Übertragungsgerät für n-plesiochrone Datensignale besteht aus einer Multiplexstufe, die die n-Digitalsignale zu einem Summensignal bündelt und einer Demultiplexstufe, die das Summensignal wieder in n-Digitalsignale auflöst. Das Verfahren, mit dem die Bitraten der plesiochronen Digitalsignale an die Bitrate des Summensignals angepaßt werden, ist als Impulsstopfen (PulsStuffing) bekannt. Ein bekanntes Verfahren ist hierzu das Positiv-Null-Negativ-Stopfen gemäß den CCITT-Empfehlungen G.702.

In der Multiplexstufe eines Digitalsignal-Übertragungsgerätes werden aus dem ankommenden plesiochronen Datensignal ein synchrones Datensignal und ein Zusatzdatensignal erzeugt. Wenn die Bitraten des plesiochronen und des synchronen Datensignals, d.h. die zugehörige plesiochrone bzw. synchrone Taktfolge voneinander abweichen, so ist von Zeit zu Zeit ein Stopfvorgang erforderlich. Wenn die Bitrate des plesiochronen Datensignals kleiner ist als die des synchronen Datensignals, so wird von Zeit zu Zeit im synchronen Datensignal ein zusätzliches Datenbit eingeblendet, bzw. ein Bit aus dem plesiochronen Datensignal zweimal übertragen. Wenn die Bitrate des plesiochronen Datensignals größer ist als die des synchronen Datensignals, so wird von Zeit zu Zeit ein Datenbit aus dem plesiochronen Datensignal herausgenommenen und nicht im synchronen Datensignal, sondern im Zusatzdatensignal übertragen. Das Zusatzdatensignal enthält sogenannte Codewörter, die der Demultiplexstufe des empfangenden Digitalsignal-Übertragungsgerätes signalisieren, zu welchem Zeitpunkt aus dem dortigen synchronen Datensignal ein Datenbit herausgenommen bzw. das im Zusatzdatensignal übertragene Datenbit in das synchrone Datensignal eingefügt werden muß. Durch das Ein- bzw. Ausfügen eines Datenbits bzw. eines sogenannten Löschbits wird, unter Verwendung der empfangsseitig wiedergewonnenen plesiochronen Taktfolge, aus dem synchronen das plesiochrone Datensignal zurückgewonnen.

Da die Stopfinformation in Form bestimmter Codewörter nur einmal über das Zusatzdatensignal übertragen wird, kann sie leicht verfälscht werden. Bei Nichterkennung wegen gestörter Übertragung muß der Synchronverlust des Datensignals an der Verschiebung des Rahmenwortes erkannt werden. Aus diesem Grund muß bei der Funkübertragung wegen möglicher Pulsstörungen das Stopfkommando weitaus mehr fehlerresistent gemacht werden.

In der Demultiplexstufe des empfangenden Digitalsignal-Übertragungsgerätes muß die plesiochrone Taktfolge wieder gewonnen werden. Hierzu wird nach einem Stopfvorgang jeweils für ein Ausgleichsintervall auf einen etwas langsamern oder einen etwas schnelleren Takt umgeschaltet, je nachdem ob positiv oder negativ gestopft wurde. Dieses Verfahren hat einen großen Jitter zur Folge, zu dessen Beseitigung eine Taktberuhigungsschaltung benötigt wird.

Aus der DE-A-32 01 965 ist ein Digitalsignal-Übertragungsgerät bekannt, bei dem das Zusatzdatensignal die momentane Phasenbeziehung zwischen der plesiochronen und der synchronen Taktfolge als binäres Phasenwort enthält. Zur Rückgewinnung der plesiochronen Taktfolge in der Demultiplexstufe des empfangenden Digitalsignal-Übertragungsgerätes aus diesem binären Phasenwort werden über einen Regenerator und einen Teiler ein Summentakt zurückgenommen, aus dem über eine Phasenregelschleife ein Bezugsdatentakt, ein Signal mit dem $2^k$-fachen der Frequenz eines Hilfstaktes sowie ein Ladeimpuls erzeugt werden kann. Zur Erzeugung der zu dem Bezugsdatentakt plesiochronen Taktfolge wird zunächst ein plesiochroner Hilfstakt wieder gewonnen und mit dem Summentakt gemischt, so daß aus diesem Signalgemisch die gewünschte plesiochrone Taktfolge über ein Filter herausgefiltert werden kann.

Es ist denkbar, das Phasenwort im Zusatzdatensignal mit einer so hohen Wiederholfrequenz zu übertragen, daß sich zwei aufeinanderfolgende Phasenworte nur in der niederwertigsten Bitstelle unterscheiden können.

Der Erfindung liegt die Aufgabe zugrunde, ein Verfahren anzugeben, durch das in der Demultiplexstufe eines Digital-Übertragungsgerätes auch bei sogenannten Pulsstörungen auf der Übertragungsstrecke das plesiochrone Datensignal aus dem empfangenen Summensignal gebildet werden kann.

Diese Aufgabe wird erfindungsgemäß durch die im Patentanspruch 1 angegebenen Maßnahmen gelöst.

Dadurch, daß das höchstwertigste Phasenbit mehrfach übertragen wird, ist die Störresistenz weiter erhöht, da Verfälschungen einzelner Bits des Phasenwortes keinen Einfluß auf das Umschaltpotential ausüben, durch das Bits im synchronen Datensignal ein- bzw. ausgefügt werden.

Dadurch, daß in der Taktrückgewinnungsstufe jeweils nur ein Taktimpuls über die Takt-Ein-Ausblendung in die plesiochrone Taktfolge ein- bzw. ausgefügt wird, wird ein größerer Jitter verhindert, insbesondere wenn mehrere bzw. höherwertige Bits des Phasenwortes verfälscht sind.

Weitere vorteilhafte Ausgestaltungen des erfindungsgemäßen Verfahrens sind in den Unteransprüchen angegeben.

Im folgenden wird die Erfindung anhand eines in der Zeichnung dargestellten Ausführungsbeispieles näher erläutert. Dabei zeigen
Fig. 1 das Blockschaltbild einer Demultiplexstufe zur Durchführung des erfindungsgemäßen Verfahrens,
Fig. 2 das Schaltbild einer in der Demultiplexstufe verwendeten Kommandoauswertstufe,
Fig. 3 und 4 in tabellarischer Form binäre Zustände zur Erläuterung der in Fig. 2 dargestellten Kommandoauswertstufe,
Fig. 5 den Aufbau des Zusatzdatensignals sowie die Form einiger Taktfolgen, und
Fig. 6 einige Taktfolgen zur Erläuterung der Wirkungsweise einer in der Demultiplexstufe enthaltenen Taktrückgewinnungsstufe.

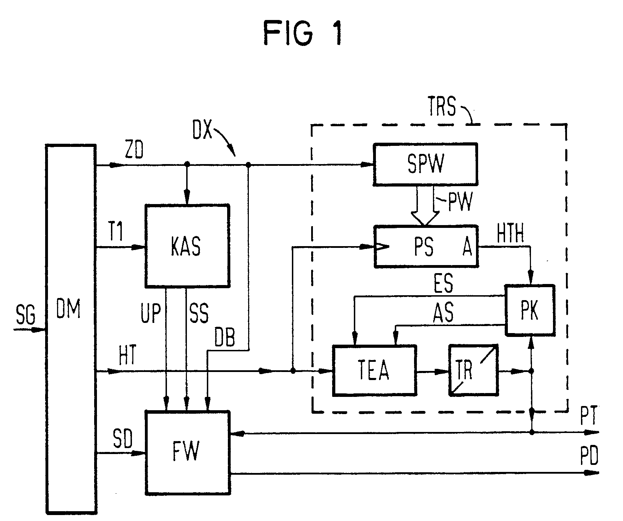

In Fig. 1 ist eine Demultiplexstufe DX eines Digitalsignal-Übertragungsgerätes dargestellt. Diese Demultiplexstufe DX weist einen an sich bekannten Demultiplexer DM auf, an dem das vom Digitalsignal-Übertragungsgerät empfangene Summensignal SG anliegt und der ein Zusatzdatensignal ZD, ein synchrones Datensignal SD, sowie eine erste Taktfolge T1 und eine Hilfstaktfolge HT abgibt.

Die Demultiplexstufe DX weist weiter einen an sich bekannten Formatwandler FW auf, der aus dem synchronen Datensignal SD ein plesiochrones Datensignal PD erzeugt. Dies geschieht beispielsweise in an sich bekannter Weise dadurch, daß im Formatwandler FW aus dem synchronen Datensignal SD ein sogenanntes normales und ein sogenanntes verzögertes (um ein halbes Datenbit verzögert) Datensignal erzeugt werden. Durch Umschalten zwischen dem normalen und dem verzögerten Datensignal zu bestimmten Zeitpunkten können das im synchronen Datensignal SD enthaltene Löschbit ausgefügt bzw. das im Zusatzdatensignal ZD übertragene Datenbit DB in das synchrone Datensignal eingefügt werden.

Am Formatwandler FW liegen ein im Zusatzdatensignal ZD enthaltenes Datenbit DB an, sowie ein Umschaltpotential UP und ein Stopfsignal SS. Letztere werden von einer Kommandoauswertstufe KAS abgegeben. An der Kommandoauswertstufe KAS liegen die erste Taktfolge T1 und das Zusatzdatensignal ZD an. Am Formatwandler FW liegt schließlich noch eine plesiochrone Taktfolge PT an, die in einer Taktrückgewinnungsstufe TRS gewonnen wird.

Die Taktrückgewinnungsstufe TRS enthält einen Seriell-Parallel-Wandler SPW, an dem das Zusatzdatensignal ZD anliegt, sowie eine Takt-Ein-Ausblendung TEA an der die Hilfstaktfolge HT anliegt. Die Taktrückgewinnungsstufe TRS enthält weiter eine programmierbare Teilerstufe PS, an der ein vom Seriell-Parallel-Wandler SPW abgegebenes Phasenwort PW in paralleler Form anliegt. Am Takteingang der programmierbaren Teilerstufe PS, von deren Ausgang A eine weitere Hilfstaktfolge HTH an einen Phasenkomparator PK gegeben wird, liegt die vom Demultiplexer DM abgegebene Hilfstaktfolge HT an. Am anderen der nicht näher bezeichneten Eingänge des Phasenkomparators PK liegt die plesiochrone Taktfolge PT an, die von der Takt-Ein-Ausblendung TEA über einen Teiler TR abgegeben wird. Vom Phasenkomparator PK werden ein Einblendsignal ES und ein Ausblendsignal AS an die Takt-Ein-Ausblendung gegeben.

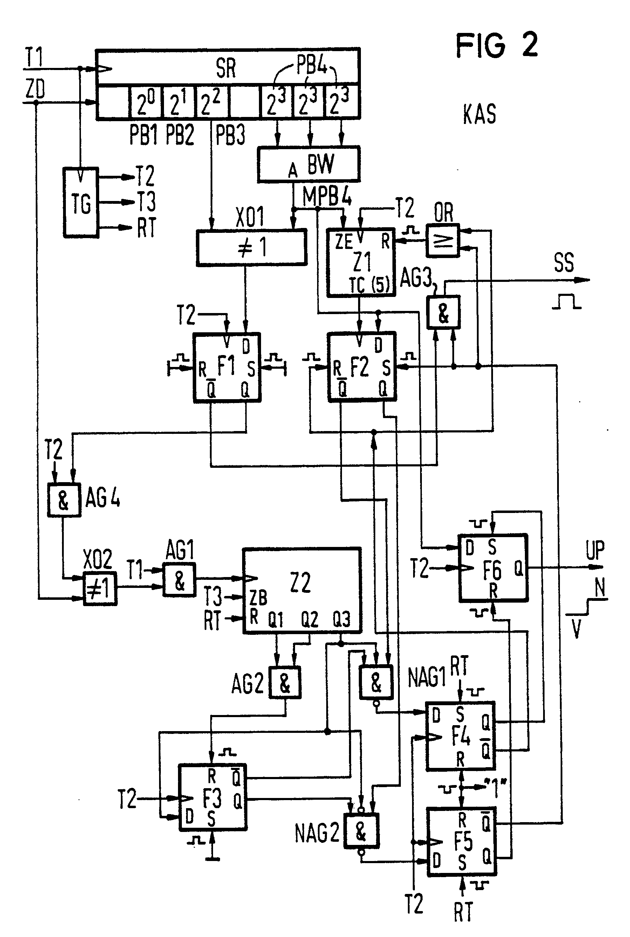

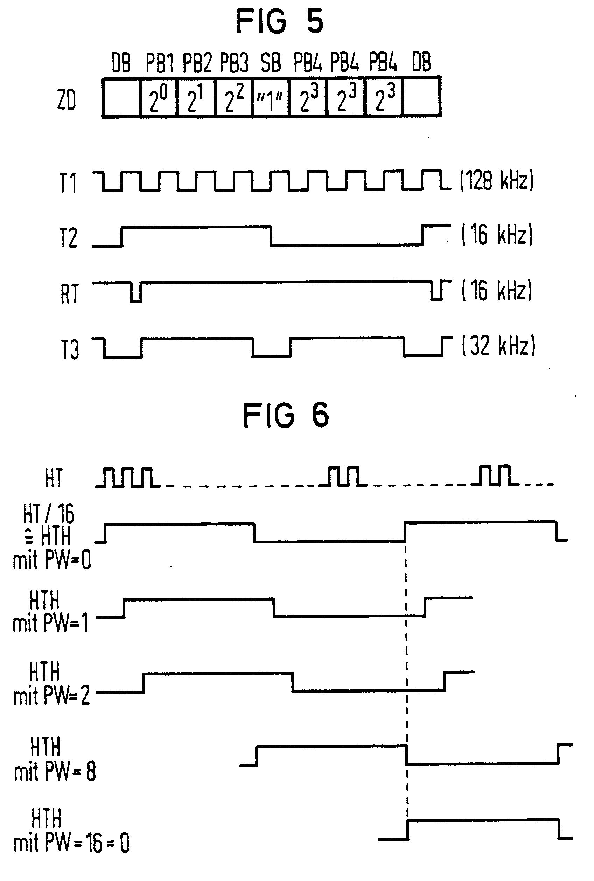

In Fig. 2 ist die Kommandoauswertstufe KAS dargestellt. Die erste Taktfolge T1 liegt an den Takteingängen eines Schieberegisters SR und eines Taktgenerators TG an. Der Taktgenerator TG gibt eine zweite und eine dritte Taktfolge T2, T3, sowie eine Rücksetztaktfolge RT ab, deren Impulsverläufe später anhand von Fig. 5 erläutert werden. Das Schieberegister SR weist beispielsweise acht Speicherplätze auf, die wie in der Fig. 2 dargestellt, mit einem ersten, einem zweiten und einem dritten Phasenbit PB1 bis PB3, sowie mit drei vierten Phasenbits PB4 besetzt sind. Die ersten vier Phasenbits PB1 bis PB4, wobei das vierte Phasenbit PB4 das höchstwertigste ist, bilden das im Zusatzdatensignal ZD enthaltene Phasenwort PW.

Die drei vierten Phasenbits PB4 liegen an einer Bewertungsstufe BW an, deren Ausgang A mit dem einen Eingang eines ersten XOR-Gatters XO1 verbunden ist. Am anderen Eingang dieses ersten XOR-Gatters XO1, dessen Ausgang mit einem Eingang D eines ersten Verzögerungs-Flip-Flops F1 verbunden ist, liegt das dritte Phasenbit PB3 an.

Der Ausgang A der Bewertungsstufe BW ist mit einem Zählrichtungseingang ZE eines ersten Zählers Z1, mit einem Eingang D eines zweiten Verzögerungs-Flip-Flops F2, und mit einem Eingang D eines sechsten Verzögerungs-Flip-Flops F6 verbunden. An den Takteingängen des ersten und des sechsten Verzögerungs-Flip-Flops F1, F6 liegt jeweils die zweite Taktfolge T2 an. Der Rücksetz- und der Setzbefehlseingang RS des ersten Verzögerungs-Flip-Flops F1 sind jeweils mit einem Bezugspotential verbunden, d.h. sie sind inaktiv geschaltet.

Ein Übertragsausgang TC des ersten Zählers Z1 ist am Takteingang des zweiten Verzögerungs-Flip-Flops F2 angeschaltet. Ein Ausgang Q des ersten Verzögerungs-Flip-Flops F1 ist mit dem einen Eingang eines vierten AND-Gatters AG4 verbunden, an dessen anderen Eingang die zweite Taktfolge T2 anliegt. Der Ausgang des vierten AND-Gatters AG4 ist mit dem einen Eingang eines zweiten XOR-Gatters XO2 verbunden, an dessen anderen Eingang die Zusatzdaten ZD anliegen. Der Ausgang des zweiten XOR-Gatters XO2 ist mit dem einen Eingang eines ersten AND-Gatters AG1 verbunden, an dessen anderen Eingang die erste Taktfolge T1 anliegt, und dessen Ausgang mit dem Takteingang eines zweiten Zählers Z2 verbunden ist.

Die dritte Taktfolge T3 liegt am Zählbefehlseingang ZB, und die Rücksetztaktfolge RT liegt am Rücksetzeingang R des zweiten Zählers Z2 an. Der zweite Zähler Z2 weist erste bis dritte Ausgänge Q1 bis Q3 auf, wobei der erste Ausgang Q1 der niederwertigste, und der dritte Ausgang Q3 der höchstwertigste Ausgang ist. Der erste und der zweite Ausgang Q1, Q2 des zweiten Zählers Z2 sind mit den Eingängen eines zweiten AND-Gatters AG2 verbunden, dessen Ausgang mit einem Rücksetzbefehlseingang R eines dritten Verzögerungs-Flip-Flops F3 verbunden ist. An den Takteingängen der dritten bis sechsten Verzögerungs-Flip-Flops F3 bis F6 liegt jeweils die zweite Taktfolge T2 an. Der Setzbefehlseingang S des dritten Verzögerungs-Flip-Flops F3 ist mit dem Bezugspotential verbunden, d.h. er ist inaktiv geschaltet.

Der dritte Ausgang Q3 des zweiten Zählers Z2 ist mit dem Eingang D des dritten Verzögerungs-Flip-Flops F3, mit einem Eingang eines ersten NAND-Gatters NAG1, und mit einem invertierenden Eingang eines zweiten NAND-Gatters NAG 2 verbunden. Der Ausgang Q des dritten Verzögerungs-Flip-Flops ist mit dem anderen Eingang des zweiten NAND-Gatters NAG2, und der invertierende Ausgang Q̄ des dritten Verzögerungs-Flip-Flops F3 ist mit dem anderen Eingang des ersten NAND-Gatters NAG1 verbunden. An einem weiteren Eingang des ersten NAND-Gatters NAG1 ist der invertierende Ausgang Q̄ des zweiten Verzögerungs-Flip-Flops F2, und an einem weiteren Eingang des zweiten NAND-Gatters NAG2 ist der Ausgang Q des zweiten Verzögerungs-Flip-Flops F2 angeschaltet.

Der Ausgang des ersten NAND-Gatters NAG1 ist mit dem Eingang D des vierten Verzögerungs-Flip-Flops F4, und der Ausgang des zweiten NAND-Gatters NAG2 ist mit dem Eingang D des fünften Verzögerungs-Flip-Flops F5 verbunden. An den Setzbefehlseingängen S des vierten und des fünften Verzögerungs-Flip-Flops F4, F5 liegt jeweils die Rücksetztaktfolge RT an, und an den Rücksetzbefehlseingängen R des vierten und des fünften Verzögerungs-Flip-Flops F4, F5 ist jeweils ein der logischen Eins entsprechendes Potential angeschaltet, d.h. er ist inaktiv geschaltet.

Der Ausgang Q des vierten Verzögerungs-Flip-Flops F4 ist mit einem Setzbefehlseingang S, und der Ausgang des fünften Verzögerungs-Flip-Flops F5 ist mit dem Rücksetzbefehlseingang R des sechsten Verzögerungs-Flip-Flops F6 verbunden. Der invertierende Ausgang Q̄ des vierten Verzögerungs-Flip-Flops F4 ist mit dem Rücksetzbefehlseingang R des zweiten Verzögerungs-Flip-Flops F2 und über ein OR-Gatter OR mit dem Rücksetzbefehlseingang R des ersten Zählers Z1 verbunden. Der invertierende Ausgang Q̄ des fünften Verzögerungs-Flip-Flops F5 ist mit dem Setzbefehlseingang S des zweiten Verzögerungs-Flip-Flop F2, mit dem einen Eingang eines dritten AND-Gatters AG3, und ebenfalls über das OR-Gatter OR mit dem Rücksetzbefehlseingang R des ersten Zählers Z1 verbunden. Der andere Eingang des dritten AND-Gatters AG3, von dessen Ausgang das Stopfsignal SS abgegeben wird, ist mit dem invertierenden Ausgang Q̄ des ersten Verzögerungs-Flip-Flops F1 verbunden. Vom Ausgang Q des sechsten Verzögerungs-Flip-Flops F6 wird das Umschaltpotential UP abgegeben.

Die ersten bis dritten Verzögerungs-Flip-Flops F1 bis F3, sowie der erste Zähler Z1 sind durch CMOS-Bausteine realisiert, d.h. deren Rücksetz- bzw. Setzbefehlseingänge R,S werden durch eine logische Eins aktiviert. Die vierten bis sechsten Verzögerungs-Flip-Flops F4 bis F6 sind durch TTL-Bausteine realisiert, d.h. deren Rücksetz- bzw. Setzbefehlseingänge R, S werden durch eine logische Null aktiviert.

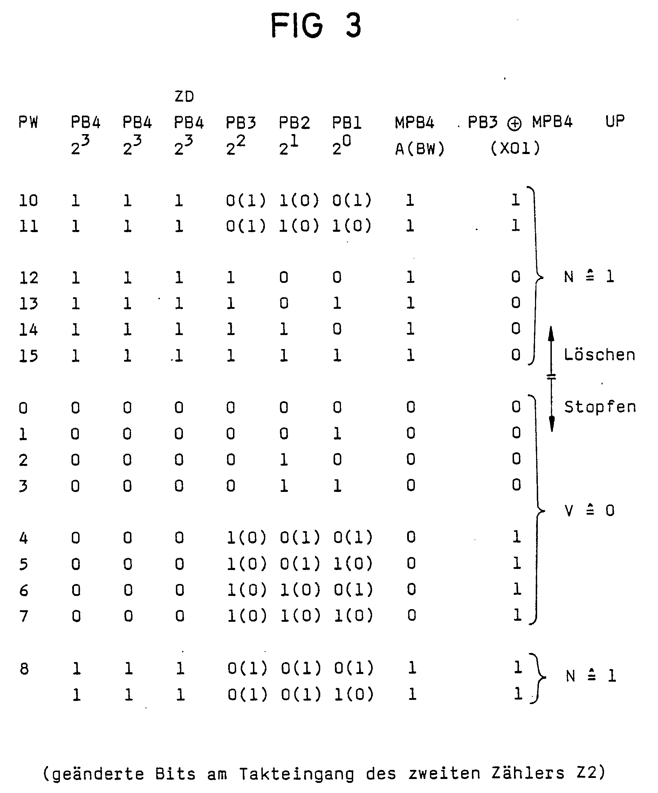

In Fig. 3 ist in tabellarischer Form der Zusammenhang zwischen den Phasenbits PB1 bis PB4 des in den Zusatzdaten ZD enthaltenen Phasenwortes PW und dem Signal am Ausgang A der Bewertungsstufe BW und dem Signal am nicht näher bezeichneten Ausgang des ersten XOR-Gatters XO1 dargestellt. Die Bewertungsstufe BW bildet einen Mehrheitsentscheid über die vierten Phasenbits MPB4, und gibt daher an seinem Ausgang A dasjenige Potential ab, daß die Mehrheit der an seinen Eingängen anliegenden vierten Phasenbits PB4 aufweist. Bei den Phasenworten PW=0 bis PW=7 ist das eine logische Null, und bei den Phasenworten PW=8 bis PW=15 eine logische Eins. Im ersten XOR-Gatter XO1 wird eine Modulo-Zwei-Addition zwischen dem dritten Phasenbit PB4 und dem Mehrheitsentscheid des vierten Phasenbits MPB4 durchgeführt. Dies ergibt für die Phasenworte PW=12 bis PW=3 eine logische Null, und für die Phasenworte PW=4 bis PW=11 eine logische Eins, wobei die Phasenworte PW zyklisch zwischen den beiden Maximalwerten PW = 0 bis PW = 15 aufwärts bzw. abwärts durchlaufen werden. Auf die in Klammern dargestellten Werte der ersten bis dritten Phasenbits PB1 bis PB3 bei den Phasenworten PW = 4 bis PW = 11 wird später eingegangen.

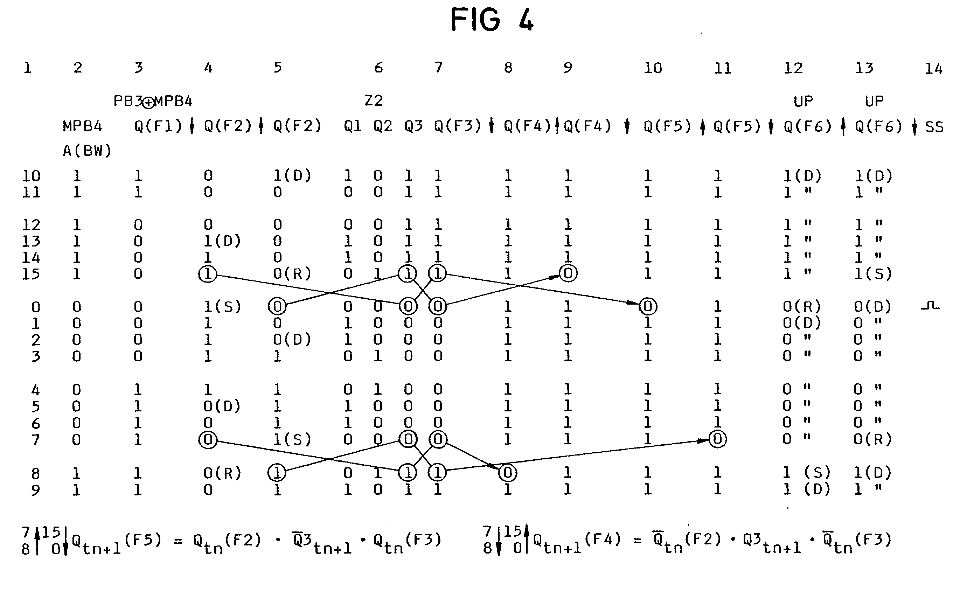

In Fig. 4 sind die an einigen Ausgängen der in Fig. 2 dargestellten Kommandoauswertestufe KAS abgreifbaren logischen Zustände in Abhängigkeit vom Wert des Phasenwortes PW dargestellt. Im einzelnen sind dies in Spalte 1 das Phasenwort PW, in Spalte 2 der am Ausgang A der Bewertungsstufe BW abgreifbare Mehrheitsentscheid des vierten Phasenbits MPB4, in Spalte 3 das am Ausgang Q des ersten Verzögerungs-Flip-Flops F1 abgreifbare Potential, das der Modulo-Zwei-Addition des dritten Phasenbits PB3 mit dem Mehrheitsentscheid des vierten Phasenbits MPB4 entspricht. Weiter sind dies die Potentiale an den ersten bis dritten Ausgängen Q1 bis Q3 des zweiten Zählers Z2 in Spalte 6, das Potential am Ausgang Q des dritten Verzögerungs-Flip-Flops F3 in Spalte 7 und das Synchronisiersignal SS in Spalte 14.

Im folgenden wurde angenommen, daß das Phasenwort PW die Werte 0,1, bis 15 zyklisch durchläuft, d.h. vom Wert 15 auf den Wert 0 springt. Dargestellt wurden hierzu die folgenden Potentiale, in Spalte 4 das am Ausgang des zweiten Verzögerungs-Flip-Flops F2, in Spalte 8 das am Ausgang Q des vierten Verzögerungs-Flip-Flops F4, in Spalte 10 das am Ausgang Q des fünften Verzögerungs-Flip-Flops F5, und in Spalte 12 das am Ausgang Q des sechsten Verzögerungs-Flip-Flops F6, von dem das Umschaltpotential UP abgegeben wird.

Im folgenden wurde angenommen, daß das Phasenwort PW die Werte 15, 14, bis 0 zyklisch durchläuft, d.h. vom Wert 0 auf den Wert 15 springt. Dargestellt wurden hierzu die folgenden Potentiale, in Spalte 5 das am Ausgang Q des zweiten Verzögerungs-Flip-Flops F2, in Spalte 9 das am Ausgang Q des vierten Verzögerungs-Flip-Flops F4, in Spalte 11 das am Ausgang Q des fünften Verzögerungs-Flip-Flops F5, und in Spalte 13 das am Ausgang Q des sechsten Verzögerungs-Flip-Flops F6, von dem das Umschaltpotential UP abgegeben wird.

Die in den einzelnen Spalten dargestellten nach oben bzw. nach unten weisenden Pfeile bezeichnen die Sprünge des Phasenwortes PW vom Wert 0 auf 15 bzw. umgekehrt. Der nach unten weisende Pfeil bezieht sich hierbei auf den Sprung des Phasenwortes PW vom Wert 15 auf den Wert 0, und der nach oben weisende Pfeil bezieht sich auf den Sprung des Phasenwertes PW vom Wert 0 auf den Wert 15. Von der in Fig. 2 dargestellten Kommandoauswertstufe KAS können auch die Übergänge des Phasenwortes PW vom Wert 7 auf den Wert 8 bzw. umgekehrt ausgewertet werden, worauf später genauer eingegangen wird.

In Fig. 5 ist ein Ausschnitt aus dem seriellen Zusatzdatensignal ZD dargestellt. Im Zusatzdatensignal ZD werden also nacheinander das Datenbit DB, dreimal das vierte Phasenbit PB4, ein Synchronisierbit SB, das dritte bis erste Phasenbit PB3 bis PB1, und wieder der gleiche Zyklus beginnend mit dem Datenbit DB übertragen. Die erste Taktfolge T1, die beispielsweise eine Impulsfolgefrequenz von 128 kHz aufweist, weist beispielsweise in der Mitte jedes Bits eine aufsteigende Flanke auf. Die zweite Taktfolge T2, die beispielsweise eine Impulsfolgefrequenz von 16 kHz aufweist, weist daher in der Mitte jedes Datenbits eine aufsteigende, und in der Mitte des Synchronisierbits SB eine abfallende Flanke auf. Die Rücksetztaktfolge RT, die ebenfalls eine Impulsfolgefrequenz von 16 kHz aufweist, weist beispielsweise nach jeder aufsteigenden Flanke der zweiten Taktfolge T2 einen kurzen negativen Impuls auf. Die dritte Taktfolge T3, die beispielsweise ein Impuslfolgefrequenz von 32 kHz aufweist, nimmt während der Dauer der Datenbits DB und der Dauer des Synchronisierbits SB ein der logischen Null, und sonst ein der logischen Eins entsprechendes Potential an.

In Fig. 6 ist in der obersten Zeile der vom Demodulator DM abgegebene Hilfstakt HT dargestellt. Bei einem Phasenwort PW, daß sechzehn verschiedene Werte annehmen kann, ist der Wert der Impulsfolgefrequenz der Hilfstaktfolge HT das sechzehnfache des Wertes der Bitrate des synchronen Datensignals SD.

In den folgenden Zeilen ist die von der programmierbaren Teilerstufe PS abgegebene weitere Hilfstaktfolge HTH in Abhängigkeit vom Wert des anliegenden Phasenwortes PW dargestellt. Die Impulsfolgefrequenz der weiteren Hilfstaktfolge HTH entspricht hierbei nominell dem Wert der Bitrate des synchronen Datensignals SD. Wie in Fig. 6 dargestellt ist, verschiebt sich die ansteigende Flanke der weiteren Hilfstaktfolge HTH jeweils um eine Impulsdauer der Hilfstaktfolge HT nach rechts, wenn der Wert des Phasenwortes PW einstufig zunimmt.

Im folgenden wird die Wirkungsweise der in Fig. 2 dargestellten Kommandoauswertstufe KAS unter Bezugnahme auf die Fig. 3 bis 5 beschrieben.

Im Taktgeber TG werden aus der ersten Taktfolge T1 die zweite und die dritte Taktfolge T2, T3 sowie die Rücksetztaktfolge RT erzeugt, die die in Fig. 5 dargestellte Impulsform aufweisen.

Mit der ersten Taktfolge T1 werden die Zusatzdaten ZD in die Bitplätze des Schieberegisters SR eingeschrieben. Mit der ansteigenden Flanke der zweiten Taktfolge T2 wird das im Schieberegister SR stehende Phasenwort PW, d.h. die Phasenbits PB1 bis PB4 ausgewertet. Die Bewertungsstufe BW gibt an ihrem Ausgang A dasjenige Potential ab, daß die Mehrheit der an ihren Eingängen anliegenden vierten Phasenbits PB4 einnimmt. Von der Bewertungsstufe BW wird also eine logische Eins bzw. logische Null abgegeben, wenn mindestens zwei der drei anliegenden vierten Phasenbits PB4 mit einer logischen Eins bzw. logischen Null besetzt sind. Wie in Fig. 3 dargestellt, ist der Mehrheitsentscheid der vierten Phasenbits MPB4 am Ausgang A der Bewertungsstufe BW während der Phasenworte PW = 0 bis PW = 7 eine logische Null und während der Phasenworte PW = 8 bis PW = 15 eine logische Eins. Voraussetzung hierfür ist, daß höchstens eins der vierten Phasenbits PB4 verfälscht ist.

Im ersten XOR-Gatter XO1 findet eine Modulo-Zwei-Addition zwischen dem dritten Phasenbit PB3 und dem Mehrheitsentscheid des vierten Phasenbits MPB4 statt. Wie in Fig. 3 dargestellt ist das Ergebnis während der Phasenworte PW = 4 bis PW = 11 eine logische Eins und während der Phasenworte PW = 12 bis PW = 3 eine logische Null.

Mit der ansteigenden Flanke der zweiten Taktfolge T2 werden das Ausgangssignal des ersten XOR-Gatters XO1, d.h. die Modulo-Zwei-Addition des dritten Phasenbits PB3 mit dem Mehrheitsentscheid der vierten Phasenbits MPB4 in das erste Verzögerungs-FlipFlop F1 übernommen. Mit jeder ansteigenden Flanke der zweite Taktfolge T2 ändert der erste Zähler Z1, der durch einen Aufwärts-Abwärts-Zähler realisiert ist, seinen Zählerstand um den Wert Eins. Beispielsweise werden der Zählerstand um den Wert Eins erhöht, wenn am Zählrichtungseingang ZE eine logische Eins anliegt, und der Zählerstand um den Wert Eins erniedrigt, wenn am Zählrichtungseingang ZE eine logische Null anliegt. Vom Übertragsausgang TC des ersten Zählers Z1 wird eine positive Flanke abgegeben, wenn der Zählerstand seinen Extremialwert, beispielsweise +5 beim Aufwärtszählen und -5 beim Abwärtszählen erreicht hat. Mit dieser Flanke am Übertragungsausgang TC wird das zweite Verzögerungs-Flip-Flop F2 getriggert und der logische Zustand des Mehrheitsentscheids der vierten Phasenbits MPB 4 in das zweite Verzögerungs-Flip-Flop F2 übernommen. Das zweite Verzögerungs-Flip-Flop F2 beinhaltet also dann den logischen Zustand des Mehrheitsentscheids der vierten Phasenbits MPB4, wenn diese fünfmal den gleichen logischen Zustand einnehmen, oder entsprechend öfter, wenn jeweils mehr als eines der drei vierten Phasenbits PB4 verfälscht ist, d.h. wenn der Mehrheitsentscheid der vierten Phasenbits MPB4 verfälscht ist.

Der logische Zustand des Mehrheitsentscheids des vierten Phasenbits MPB4 wird mit der nächsten ansteigenden Flanke der zweiten Taktfolge T2 in das sechste Verzögerungs-Flip-Flop F6 übernommen, und von dessen Ausgang Q als Umschaltpotential UP abgegeben. Hierbei entspricht beispielsweise eine logische Eins dem normalen, und eine logische Null dem verzögertem Datensignal im Formatwandler FW.

Der logische Zustand des Mehrheitsentscheids des vierten Phasenbits MPB4 bestimmt auf diese Weise solange den logischen Zustand des Umschaltpotentials UP, bis von den in der unteren Hälfte der in Fig. 2 dargestellten Bausteine ein sogenanntes Kommando, d.h. ein Übergang des Phasenwortes PW zwischen den Werten 0 und 15 bzw. den Werten 7 und 8 erkannt wird. Wenn ein Kommando erkannt wird, wird das Umschaltpotential UP über den Setz- bzw. den Rücksetzbefehlseingang S, R des sechsten Verzögerungs-Flip-Flop F6 bestimmt.

Im Formatwandler FW wird also beim Übergang des Phasenwortes PW vom Wert 15 auf den Wert 0, d.h. die Bitrate des plesiochronen Datensignals PD ist höher als die Bitrate des synchronen Datensignals SD, bzw. beim Übergang vom Wert 8 auf den Wert 7, d.h. die Bitrate des plesiochronen Datensignals PD ist niedriger als die Bitrate des synchronen Datensignals SD, vom normalen auf das verzögerte Datensignal geschaltet.

Analog hierzu wird im Formatwandler FW beim Übergang des Phasenwortes PW vom Wert 0 auf den Wert 15, d.h. die Bitrate des plesiochronen Datensignals PD ist niedriger als die Bitrate des synchronen Datensignals SD, bzw. beim Übergang vom Wert 7 auf den Wert 8, d.h. die Bitrate des plesiochronen Datensignals PD ist höher als die Bitrate des synchronen Datensignals SD, vom verzögerten auf das normale Datensignal geschaltet.

Zusätzlich wird, wie später noch genauer erläutert wird, beim Übergang des Phasenwortes PW vom Wert 15 auf den Wert 0 das Stopfsignal SS, d.h. beispielsweise ein positiver Impuls abgegeben. Hierdurch wird bewirkt, daß das im Zusatzdatensignal ZD übertragene Datensignal DB in das synchrone Datensignal SD eingefügt (gestopft) wird.

Durch das Umschalten vom verzögerten auf das normale Datensignal im Formatwandler FW wird beim Übergang des Phasenwortes vom Wert 0 auf den Wert 15 ein Bit, das sogenannte Löschbit, im synchronen Datensignal SD ausgefügt bzw. gelöscht.

Im folgenden werden die in der unteren Hälfte der in Fig. 2 dargestellten Bausteine zur Auswertung der "Kommandos" beschrieben.

Der zweite Zähler Z2 und die nachgeschalteten Baugruppen dienen zur Auswertung der Übergänge des Phasenwortes zwischen den Werten 0 und 15 und zwischen den Werten 7 und 8 Diese Übergänge müssen besonders sicher erkannt werden, da ein nicht oder falsch eingefügtes Datenbit DB bzw. ein nicht aus dem synchronen Datensignal SD herausgenommenes sogenanntes Löschbit zu einer längeren Fehlerserie des plesiochronen Datensignals PD führt.

Das zweite XOR-Gatter XO2 wird dazu verwendet, damit der zweite Zähler Z2 sowohl den Übergang des Phasenwortes PW zwischen den Werten 0 und 15 als auch den Übergang des Phasenwortes zwischen den Werten 7 und 8 auswerten kann. Über das zweite XOR-Gatter XO2 werden die Phasenworte PW zwischen den Werten 12 bis 3 unverändert weitergegeben (siehe Fig. 3). Bei den Phasenworten PW zwischen den Werten 4 bis 11 werden jeweils die ersten bis dritten Phasenbits PB1 bis PB3 durch das zweite XOR-Gatter XO2 umgepolt (siehe die in Klammern gesetzten Werte in Fig. 3). Dies geschieht folgendermaßen.

Während der Phasenworte PW mit den Werten 12 bis 3 liegt am vierten AND-Gatter AG4 vom Ausgang Q des ersten Verzögerungs-Flip-Flops F1 her eine logische Null an, so daß auch das Ausgangssignal des vierten AND-Gatters AG4 eine logische Null ist. Diese logische Null liegt auch am zweiten XQR-Gatter XO2 an, so daß das im Zusatzdatensignal ZD enthaltene Phasenwort PW unverändert an das erste AND-Gatter AG1 weitergegeben wird. Während der Werte 4 bis 11 des Phasenwortes PW liegt am vierten AND-Gatter AG4 vom Ausgang Q des ersten Verzögerungs-Flip-Flops F1 herrührend eine logische Eins an. Am anderen Eingang des vierten AND-Gatters AG4 liegt die zweite Taktfolge T2 an, so daß während die zweite Taktfolge T2 eine logische Eins annimmt, vom Ausgang des vierten AND-Gatters AG4 diese logische Eins an das zweite XOR-Gatter XO2 gegeben wird. D.h. während der Werte 4 bis 11 des Phasenwortes PW werden die ersten bis dritten Phasenbits PB1 bis PB3 mit vertauschter Polarität an das erste AND-Gatter AG1 abgegeben.

Im ersten AND-Gatter AG1 wird zwischem dem vom zweiten XOR Gatter XO2 abgegebenen Phasenwort PW und der ersten Taktfolge T1 eine logische UND-Verknüpfung durchgeführt. Vom Ausgang des ersten AND-Gatters AG1 wird daher an den Takteingang des zweiten Zählers Z2 eine logische Null gegeben, wenn die Bits des vom zweiten XOR-Gatters XO2 abgegebenen Phasenwortes PW logisch Null sind. Vom ersten AND-Gatter AG1 werden Impulse abgegeben, wenn die zugehörigen Bits des vom zweiten XOR-Gatters XO2 abgegebenen Phasenwortes PW logisch Eins sind, bzw. logische Einsen enthalten.

Durch die am Zählbefehlseingang ZB des zweiten Zählers Z2 anliegende dritte Taktfolge T3 wird bewirkt, daß das Datenbit DB und das Synchronisierbit SB im Zusatzdatensignal ZD keinen Einfluß auf den Zählerstand des zweiten Zählers Z2 haben. Über die Rücksetztaktfolge RS am Rücksetzbefehlseingang R des zweiten Zählers Z2 wird dieser nach jeder Auswertung eines Phasenwortes PW beispielsweise auf Null gesetzt.

Die verschiedenen, an den Ausgängen Q1 bis Q3 des zweiten Zählers Z2 abgreifbaren Zählerstände, sind in Abhängigkeit vom jeweils ausgewerteten Phasenwort PW in Spalte 6 der Fig. 4 dargestellt. Hierbei wurde angenommen, daß keines der Phasenbits PB1 bis PB4 im Phasenwort PW verfälscht war. Da bei keinem Wert des Phasenwortes PW gleichzeitig vom ersten und vom zweiten Ausgang Q1, Q2 des zweiten Zählers Z2 eine logische Eins an das zweite AND-Gatter AG2 gegeben wird, liegt am Rücksetzbefehlseingang R des dritten Verzögerungs-Flip-Flops F3 immer eine logische Null an. Hierdurch ist das Potential am Ausgang Q, bzw. das im invertierenden Ausgang Q des dritten Verzögerungs-Flip-Flops F3 durch das am Eingang D des dritten Verzögerungs-Flip-Flops F3 anliegende Potential vom dritten Ausgang Q3 des zweiten Zählers Z2 her bestimmt.

Im ersten NAND-Gatter NAG1 wird eine logische UND-Ver knüpfung zwischen dem Potential am invertierten Ausgang Q̄ des zweiten Verzögerungs-Flip-Flops F2 zum Zeitpunkt tn, dem Potential am dritten Ausgang Q3 des zweiten Zählers Z2 zum Zeitpunkt tn + 1, und dem Potential am invertierten Ausgang Q̄ des dritten Verzögerungs-Flip-Flops F3 zum Zeitpunkt tn durchgeführt. Das invertierte Verknüpfungsergebnis liegt am Eingang D des vierten Verzögerungs-Flip-Flops F4 an, und bestimmt dessen Ausgangspotential zum Zeitpunkt tn + 1.

Die Zeitpunkte tn bzw. tn + 1 beziehen sich hierbei auf die jeweilige Auswertung des Phasenwortes PW = n bzw. PW = n + 1. Aufgrund der Gatterlaufzeiten ist zu einer ansteigenden Flanke der zweiten Taktfolge t2 zum Zeitpunkt tn + 1 am Ausgang Q bzw. am invertierten Ausgang Q̄ des dritten Verzögerungs-Flip-Flops F3 ein logischer Zustand abgreifbar, der durch die Auswertung des Phasenwortes PW = n bestimmt ist. Gleichzeitig liegt zu diesem Zeitpunkt tn + 1 am Eingang D des dritten Verzögerungs-Flip-Flops F3 ein logischer Zustand an, der durch die Auswertung des Phasenwortes PW = n + 1 bestimmt ist. Dieser logische Zustand erscheint zum Zeitpunkt tn + 1 + dt , wobei dt die Gatterlaufzeit des Flip-Flops ist, am Ausgang Q des Flip-Flops.

Im zweiten NAND-Gatter NAG2 wird eine logische UND-Verknüpfung zwischen dem Potential am Ausgang Q des zweiten Verzögerungs-Flip-Flops F2 zum Zeitpunkt tn, dem invertierten Potential am dritten Ausgang Q3 des zweiten Zählers Z2 zum Zeitpunkt tn + 1, und dem Potential am Ausgang Q des dritten Verzögerungs-Flip-Flops F3 zum Zeitpunkt tn durchgeführt. Das invertierte Verknüpfungsergebnis liegt am Eingang D des fünften Verzögerungs-Flip-Flops F5 an, und bestimmt dessen Ausgangspotential zum Zeitpunkt tn + 1.

Diese beiden logischen Verknüpfungen sind formelmäßig in Fig. 4 dargestellt. Das vierte Verzögerungs-Flip-Flop F4 wertet hierbei die Sprünge des Phasenwortes PW vom Wert 0 auf den Wert 15, und vom Wert 7 auf den Wert 8 aus. Das fünfte Verzögerungs-Flip-Flop F5 wertet die Sprünge des Phasenwortes PW vom Wert 15 auf den Wert 0 und vom Wert 8 auf den Wert 7 aus. Diese Vorgänge werden im folgenden noch genauer beschrieben.

Wie in Fig. 4, Spalte 7 dargestellt, gibt der Ausgang Q des dritten Verzögerungs-Flip-Flops F3 während der Phasenworte PW = 0 bis PW = 7 eine logische Null und während der Phasenworte PW = 8 bis PW = 15 eine logische Eins ab. Dies gibt unabhängig davon, ob die Phasenworte PW in auf-oder absteigende Reihenfolge durchlaufen werden.

In Fig. 4 sind die logischen Zustände an den zum Verständnis wichtigen Anschlüsse der in Fig. 2 dargestellten Kommandoauswertestufe KAS eingetragen. Für die Übergänge des Phasenwortes PW zwischen den Werten 0 und 15 bzw. 7 und 8 sind jeweils die für das Erkennen des Überganges, d.h. des Kommandos, relevanten logischen Zustand mit Kreisen versehen und durch einen Polygonzug miteinander verbunden.

Im folgenden werden im einzelnen die Übergänge des Phasenwortes PW zwischen den Werten 0 und 15 bzw. 7 und 8 beschrieben. Diese Übergänge sowie das Verhalten der Kommandoauswertestufe KAS bei den anderen Werten des Phasenwortes PW sind aus Fig. 4 entnehmbar. In einigen Spalten in Fig. 4 sind neben den logischen Zustandswerten in Klammern die Anschlüsse - Eingang D, Setz- bzw. Rücksetzbefehlseingang S, R - angegeben, über die das betreffende Verzögerungs-Flip-Flop geschaltet wurde.

Im folgenden wird ein erster Fall angenommen, in dem das Phasenwort PW die Werte 0 bis 15 in aufsteigender Reihenfolge durchläuft, d.h. die Bitrate des plesiochronen Datensignals PD ist größer als die Bitrate des synchronen Datensignals SD. Für diesen Fall sind in Fig. 4 neben den Spalten 1 bis 3, 6, und 7, die Spalten 4, 8, 10, 12 und 14 relevant, d.h. die Spalten bei denen ein nach unten zeigender Pfeil eingezeichnet ist. Dieser Pfeil bezieht sich auf den Sprung des Phasenwortes PW vom Wert 15 auf den Wert 0.

Wie schon dargelegt, wird der Übergang des Phasenwortes PW vom Wert 15 auf den Wert 0 im fünften Verzögerungs-Flip-Flop F5 ausgewertet. Bei diesem Übergang liegen zum Zeitpunkt tn + 1 mit n = 15, d.h. mit n + 1 = 0 erstmal am zweiten NAND-Gatter NAG2 drei logische Einsen (die logische Eins vom dritten Ausgang Q3 des zweiten Zählers Z2 her wird invertiert) an. Mit der nächsten ansteigenden Flanke der zweiten Taktfolge T2 werden der Ausgang Q bzw. der invertierte Ausgang Q̄ des fünften Verzögerungs-Flip-Flops F5 auf logisch Null bzw. logisch Eins gesetzt. Hierdurch wird der Ausgang Q der sechsten Verzögerungs-Flip-Flops F6 über dessen Rücksetzbefehlseingang R, d.h. das Umschaltpotential UP auf logisch Null gesetzt (d.h. im Formatwandler FW, siehe Fig. 1, wird auf das verzögerte Datensignal umgeschaltet). Gleichzeitig wird der Ausgang Q des zweiten Verzögerungs-Flip-Flops F2 über dessen Setzbefehlseingang S auf logisch Eins gesetzt. Weiter wird gleichzeitig über das dritten AND-Gatter AG3, an dem eine logische Eins vom invertierten Ausgang Q̄ des ersten Verzögerungs-Flip-Flops F1 her und eine logische Eins vom invertierten Ausgang Q̄ des fünften Verzögerungs-Flip-Flops F5 her anliegen, als Stopfsignal SS ein positiver Impuls abgegeben. Der positive Impuls wird durch das Setzen des invertierten Ausganges Q̄ des fünften Verzögerungs-Flip-FlopsF5 auf eine logische Null bewirkt, da kurz nach der ansteigenden Flanke der zweiten Taktfolge T2 ein negativer Impuls von der Rücksetztaktfolge RT her am Setzbefehlseingang S der fünften Verzögerungs-Flip-Flops F5 anliegt.

Schließlich wird noch der Zählerstand des ersten Zählers Z1 auf Null gesetzt.

Wie schon früher beschrieben wurde, wird beginnend mit dem Phasenwort PW = 0 auffrund des Mehrheitsentscheids der vierten Phasenbits MPB4 = 0 der Zählerstand des ersten Zählers Z1 laufend einstufig erniedrigt. Beim extremalen Zählerstand -5 des ersten Zählers Z1 wird von dessen Übertragungsausgang TC eine ansteigende Flanke abgegeben, so daß beim Phasenwort PW = 5 Ausgang Q des zweiten Verzögerungs-Flip-Flops F2 eine logische Null aufscheint.

Wie schon dargelegt, wird der Übergang des Phasenwortes PW vom Wert 7 auf den Wert 8 im vierten Verzögerungs-Flip-Flop F4 ausgewertet. Bei diesem Übergang liegen zum Zeitpunkt tn + 1 mit n = 7 d.h. mit n + 1 = 8 erstmals am ersten NAND-Gatter NAG1 drei logische Einsen (es liegen die invertierten Ausgänge Q̄ des zweiten und des dritten VerzögerungsFlip-Flops F2, F3 an) an. Mit der nächsten ansteigenden Flanke der zweiten Taktfolge T2 werden der Ausgang Q bzw. der invertierte Ausgang Q̄ des vierten Verzögerungs-Flip-Flops F4 auf logisch Null bzw. logisch Eins gesetzt. Hierdurch wird der Ausgang Q des sechsten Verzögerungs-Flip-Flops F6 über dessen Setzbefehlseingang S, d.h. das Umschaltpotential UP auf logisch Eins gesetzt (d.h. im Formatwandler FW, siehe Fig. 1, wird auf das normale Datensignal umgeschaltet). Gleichzeitig wird der Ausgang Q des zweiten Versögerungs-Flip-Flops F2 über dessen Rücksetzbefehlseingang R auf logisch Null gesetzt. Schließlich wird noch der Zählerstand des ersten Zählers Z1 auf Null gesetzt.

Wie schon früher beschrieben wurde, wird beginnend mit dem Phasenwort PW = 8 aufgrund des Mehrheitsentscheids der vierten Phasenbits MPB4 = 1 der Zählerstand des ersten Zählers Z1 laufend einstufig erhöht. Beim extremen Zählerstand + 5 des ersten Zählers Z1 wird von dessen Übertragsausgang TC eine ansteigende Flanke abgegeben, so daß beim Phasenwort PW = 13 am Ausgang Q des zweiten Verzögerungs-Flip-Flops F2 eine logische Eins aufscheint.

Im folgenden wird ein zweiter Fall angenommen, in dem das Phasenwort PW die Werte 15 bis 0 in absteigender Reihenfolge durchläuft, d.h. die Bitrate des plesiochronen Datensignals PD ist kleiner als die Bitrate des synchronen Datensignals SD. Für diesen Fall sind in Fig. 4 neben den Spalten 1 bis 3, 6 und 7, die Spalten 5, 9, 11 und 13 relevant, d.h. die Spalten bei denen ein nach oben zeigender Pfeil eingezeichnet ist. Dieser Pfeil bezieht sich auf den Sprung des Phasenwortes PW vom Wert 0 auf den Wert 15.

Wie schon dargelegt wird der Übergang des Phasenwortes vom Wert 0 auf den Wert 15 im vierten Verzögerungs-Flip-Flop F4 ausgewertet. Bei diesem Übergang liegen zum Zeitpunkt tn + 1 mit n = 0 d.h. mit n + 1 = 15 erstmals am ersten NAND-Gatter NAG1 drei logische Einsen (es liegen die invertierten Ausgänge $\overline{Q}$ des zweiten und des dritten Verzögerungs-Flip-Flops F2, F3 an) an. Mit der nächsten ansteigenden Flanke der zweiten Taktfolge T2 werden der Ausgang Q bzw. der invertierte Ausgang $\overline{Q}$ des vierten Verzögerungs-Flip-Flops F4 auf logisch Null bzw. logisch Eins gesetzt. Hierdurch wird der Ausgang Q des sechsten Verzögerungs-Flip-Flop F6 über dessen Setzbefehlseingang S, d.h. das Umschaltpotential UP auf logisch Eins gesetzt (d.h. im Formatwandler FW, siehe Fig. 1, wird auf das normale Datensignal umgeschaltet).

Gleichzeitig wird der Ausgang Q des zweiten Verzögerungs-Flip-Flops F2 über dessen Rücksetzbefehlseingang R auf logisch Null gesetzt. Schließlich wird noch der Zählerstand des ersten Zählers Z1 auf Null gesetzt.

Wie schon früher beschrieben wurde, wird beginnend mit dem Phasenwort PW = 15 aufgrund des Mehrheitsentscheids der vierten Phasenbits MPB4 = 1 der Zählerstand des ersten Zählers Z1 laufend einstufig erhöht. Beim extremen Zählerstand + 5 des ersten Zählers Z1 wird von dessen Übertragsausgang TC eine ansteigende Flanke abgegeben, so daß beim Phasenwort PW = 10 am Ausgang Q des zweiten Verzögerungs-Flip-Flops F2 eine logische Eins aufscheint.

Wie schon dargelegt wird der Übergang des Phasenwortes PW vom Wert 8 auf den Wert 7 im fünften Verzögerungs-Flip-Flop F5 ausgewertet. Bei diesem Übergang liegen zum Zeitpunkt tn + 1 mit n = 8 d.h. mit n + 1 = 7 erstmals am zweiten NAND-Gatter NAG2 drei logische Einsen (die logische eins vom dritten Ausgang Q3 des zweiten Zählers Z2 her wird invertiert) an. Mit der nächsten ansteigenden Flanke der zweiten Taktfolge T2 werden der Ausgang Q bzw. der invertierte Ausgang $\overline{Q}$ des fünften Verzögerungs-Flip-Flops F5 auf logisch Null bzw. auf logisch Eins gesetzt. Hierdurch wird der Ausgang Q des sechsten Verzögerungs-Flip-Flop F6 über dessen Rücksetzbefehlseingang R, d.h. das Umschaltpotential UP auf logisch Null gesetzt (d.h. im Formatwandler FW, siehe Fig. 1, wird auf das verzögerte Datensignal umgeschaltet). Gleichzeitig wird der Ausgang des zweiten Verzögerungs-Flip-Flops F2 über dessen Setzbefehlseingang S auf logisch Eins gesetzt. Schließlich wird noch der Zählerstand des ersten Zählers Z1 auf Null gesetzt.

Wir schon früher beschrieben wurde, wird beginnend mit dem Phasenwort PW = 7 aufgrund des Mehrheitsentscheids der vierten Phasenbits MPB4 = 0 der Zählerstand des ersten Zählers Z1 laufend einstufig erniedrigt. Beim extremalen Zählerstand -5 des ersten Zählers Z1 wird von dessen Übertragsausgang TC eine ansteigende Flanke abgegeben, so daß beim Phasenwort PW = 2 am Ausgang des zweiten Verzögerungs-Flip-Flops F2 eine logische Null aufscheint.

Wie ebenfalls schon früher dargelegt wurde, ist in der Kommandoauswertestufe KAS in den Fällen in denen kein Kommando ausgewertet wird, d.h. in den Fällen in denen das Phasenwort PW keinen Übergang zwischen den Werten 0 und 15 bzw. 7 und 8 ausführt, daß Umschaltpotential UP am Ausgang Q des sechsten Verzögerungs-Flip-Flops F6 durch den an dessen Eingang D anliegenden Mehrheitsentscheid der vierten Phasenbits MPB4 bestimmt. In diesen Fällen ist in Spalte 13 in Fig. 4 hinter den entsprechenden logischen Zuständen in Klammern ein D eingetragen.

Im folgenden wird die Wirkungsweise der in Fig. 2 dargestellten Kommandoauswertstufe KAS kurz zusammengefaßt erläutert.

Die Kommandoauswertstufe KAS gibt das Umschaltpotential UP ab, durch das das Umschalten zwischen dem normalen und dem verzögerten Datensignal im Formatwandler FW (siehe Fig. 1) gesteuert wird. Die Umschaltung erfolgt zwischen den Werten 0 und 15 sowie zwischen den Werten 7 und 8 des Phasenwortes PW.

Durch die Verwendung des zweiten XOR-Gatters X02 kann für beide Übergänge im sog. Multiplexbetrieb die gleiche Auswerteschaltung verwendet werden. Im entsprechenden Arbeitsbereich werden die drei niederwertigsten Bits (erstes bis drittes Phasenbit PB1 bis PB3) umgepolt.

Bei Betriebszuständen, bei denen keine Phasenwortänderungen auftreten, d.h. die Bitraten des plesiochronen und des synchronen Datensignals PD, SD sind einander gleich, wird zusätzlich der Mehrheitsentscheid der höchstwertigsten, mehrfach übertragenen (vierten) Phasenbits PB4 für die Umschaltung ausgewertet.

Die Erkennung eines Überganges bzw. eines Kommandos ist noch durch weitere Maßnahmen abgesichert. Vor jedem Kommando muß der Mittelwert über die Mehrheit, d.h. der Mehrheitsentscheid der vierten Phasenbits MPB4 einen bestimmten Zustand annehmen, beispielsweise eine logische Eins beim Übergang des Phasenwortes PW vom Wert 15 auf den Wert Null (siehe Spalte 4 in Fig. 4).

Weiter muß vor dem Kommando ein Übergang des Phasenwortes PW im entgegengesetzten Sinn erkannt worden sein (siehe Spalte 7 in Fig 4). Ein Kommando wird also nur dann ausgewertet, wenn alle Voraussetzungen erfüllt sind.

Falsche Befehle werden auf diese Weise mit großer Sicherheit vermieden. In dem Fall, in dem trotzdem ein Übergang bzw. ein Kommando nicht erkannt wird, wird die Änderung der Polarität des Mehrheitsentscheides der vierten Phasenbits MPB4 (siehe Spate 2, Fig. 4) für die Umschaltung zwischen dem normalen und dem verzögerten Datensignal verwendet.

Der Befehl zum Einfügen des Datenbits DB in das synchrone Datensignal SD im Formatwandler FW wird in diesem Fall unterdrückt, so daß daher ein Bit des synchronen Datensignals SD zweifach in das plesiochrone Datensignal PD übernommen wird.

Nun folgen Ausführungen zur Felerresistenz der in Fig. 2 dargestellten Kommandoauswertstufe KAS.

Der in der Bewertungsstufe BW durchgeführte Mehrheitsentscheid der vierten Phasenbits MPB4 ist gegen Verfälschungen von jeweils einem der vierten Phasenbits PB4 unempfindlich. Durch die sog. "Integration" des Mehrheitsentscheids der vierten Phasenbits MPB4 im ersten Zähler Z1 ist die Kommandoauswertung auch bei Verfälschung mehrerer der vierten Phasenbits PB4 im Phasenwort PW unempfindlich.

Bei der Auswertung der Kommandos können bis zu drei Bits des Phasenwortes PW verfälscht sein. Erst bei vier verfälschten Bits gibt beispielsweise beim Phasenwort PW = 15 der dritte Ausgang Q3 des zweiten Zählers statt einer logischen Eins eine logische Null ab.

Im folgenden wird die in Fig. 1 dargestellte Taktrückgewinnungsstufe TRS auch unter Bezugsnahme auf Fig. 6 erläutert.

Im Seriell-Parallel-Wandler SPW werden das erste bis vierte Phasenbit PB1 bis PB4 des Phasenwortes PW in eine parallele Form gebracht und an die programmierbare Teilerstufe PS gegeben. Wie schon anhand von Fig. 6 erläutert wurde, wird die vom Demultiplexer DM abgegebene Hilfstaktfolge HT in der programmierbaren Teilerstufe PS beispielsweise um den Wert 16 heruntergeteilt, wobei die ansteigende Flanke der von der programmierbaren Teilerstufe PS abgegebenen weiteren Hilfstaktfolge HTH in Abhängigkeit vom Wert des Phasenwortes PW zeitlich versetzt ist.

Die weiteren Baustufen der Taktrückgewinnungsstufe TRS dienen dazu, um größere Phasensprünge der plesiochronen Taktfolge PT zu vermeiden. Bei Verfälschung insbesondere höherwertiger Phasenbits PB1 bis PB4 des Phasenwortes PW treten größere sprunghafte Änderungen der Phasenlage der Taktflanken der plesiochronen Taktfolge PT auf. Über die Takt-Ein-Ausblendung TEA wird dies verhindert. In der Taktein-Ausblendung TEA kann beispielsweise innerhalb von zwei Impulsen der Hilfstaktfolge HT nur ein Impuls ein-bzw. ausgefügt werden. Angesteuert wird die Takt-Ein-Ausblendung TEA von dem Phasenkomparator PK, der die Phasenlage der weiteren Hilfstaktfolge HTH mit der Phasenlage der mit dem Teilungsfaktor 16 heruntergeteilten Hilfstaktfolge HT vergleicht. Wenn der Phasenkomparator PK eine Phasendifferenz zwischen diesen beiden Signalen feststellt, wird über das Einblendsignal ES bzw. Ausblendsignal AS in der Takt-Ein-Ausblendung TEA ein Impuls in die Hilfstaktfolge HTH ein- bzw. ausgeblendet. Hierdurch wird ein sehr geringer Jitter der plesiochrone Taktfolge PT sichergestellt.

## Ansprüche

1. Verfahren zur Rückgewinnung eines plesiochronen Datensignals (PD) in einer Demultiplexstufe (DX) eines Digitalsignal-Übertragungsgerätes, bei dem in einem Demultiplexer (DM) das empfangene Summensignal (SG), das in einem sendenden Digitalsignal-Übertragungsgerät unter Anwendung des sogenannten Puls-Stuffing erzeugt wurde, in ein synchrones Datensignal (SD) und ein Zusatzdatensignal (ZD) zerlegt wird, bei dem in einem Formatwandler (FW) aufgrund von einer im Zusatzdatensignal (ZD) übertragenen Stopfinformation ein ebenfalls im Zusatzdatensignal (ZD) übertragenes Datenbit (DB) in das synchrone Datensignal (SD) eingefügt bzw. ein Bit aus dem synchronen Datensignal (SD) ausgefügt wird, und bei dem in einer Taktrückgewinnungsstufe (TRS) eine plesiochrone Taktfolge (PT) gebildet wird, mit der das plesiochrone Datensignal (PD) aus dem Formatwandler (FW) ausgelesen wird,

**dadurch gekennzeichnet,**

daß die Stopfinformation ausschließlich aus Phasenworten (PW) besteht, die in digitaler Form die momentane Phasenbeziehung zwischen dem Summensignal (SG) und dem plesiochronen Datensignal (PD) enthalten, wobei die Folgefrequenz der Phasenworte (PW) bei feiner Wertstufung im Summensignal (SG) so hoch gewählt ist, daß sich zwei aufeinanderfolgende Phasenworte (PW) höchstens im niederwertigsten Bit unterscheiden können, daß in einer Kommandoauswertstufe (KAS) die Phasenworte (PW) ausgewertet werden, wobei die Kommandoauswertstufe (KAS) beim Überschreiten der Extremwerte der Phasenworte (PW) Steuersignale an den Formatwandler (FW) gibt, durch die Bits in das synchrone Datensignal (SD) eingefügt bzw. aus dem synchronen Datensignal (SD) ausgefügt werden, daß das höchstwertigste Bit des Phasenwortes (PW) mehrfach übertragen wird, daß in der Kommandoauswertstufe (KAS) eine Bewertungsstufe (BW) vorgesehen ist, die ein Potential abgibt, das der Mehrheit der höchstwertigsten Bits des Phasenwortes (PW) entspricht, daß das Ausgangspotential der Bewertungsstufe (BW) über mehrere Phasenworte (PW) hinweg aufintegriert wird, und bei Erreichen eines vorbestimmten Wertes ein erstes Kriterium erfüllt ist, daß ein Überschreiten eines Exrtremwertes ebenso wie das Überschreiten eines Mittelwertes des Phasenwortes (PW) über alle Bits des Phasenwortes (PW) hinweg ausgewertet wird, wobei bei Erkennen eines Überganges ein weiteres Kriterium erfüllt ist, daß ein drittes Kriterium erfüllt ist, wenn vor einem Überschreiten eines Extremwertes bzw. eines Mittelwertes jeweils das Überschreiten eines Mittelwertes bzw. eines Extremwertes des Phasenwortes (PW) erkannt wurde, und daß bei Erfüllung aller drei Kriterien das Umschaltpotential (UP) auf den dem Übergang des Phasenwortes (PW) entsprechenden Wert gesetzt wird.

2. Verfahren nach Anspruch 1,
   **dadurch gekennzeichnet,**
   daß das Ausgangspotential der Bewertungsstufe (BW) als Umschaltpotential (UP) eines der Steuersignale darstellt, das zum Ein- bzw. Ausfügen von Bits im synchronen Datensignal (SD) verwendet wird.

3. Verfahren nach Anspruch 1 oder 2,
   **dadurch gekennzeichnet,**
   daß aus dem synchronen Datensignal (SD) im Formatwandler (FW) ein normales und ein um ein halbes Bit verzögertes Datensignal erzeugt wird, wobei das Ein- bzw. Ausfügen von Bits im synchronen Datensignal (SD) durch das Umschalten zwischen den beiden Datensignalen bei den Extremwerten des Phasenwortes (PW) bewirkt wird, wobei die logischen Zustände des Umschaltpotentials (UP) jeweils dem normalen bzw. dem verzögerten Datensignal entsprechen.

4. Verfahren nach einem der vorhergehenden Ansprüche,
   **dadurch gekennzeichnet,**
   daß in der Taktrückgewinnungsstufe (TRS) aus einer vom Demultiplexer (DM) abgegebenen Hilfstaktfolge (HT) über eine programmierbare Teilerstufe (PS) eine weitere Hilfstaktfolge (HTH) erzeugt wird, wobei die Impulsfolgefrequenzen der weiteren Hilfstaktfolge (HTH) und der plesiochronen Taktfolge (PT) einander und die Impulsfolgefrequenz der Hilfstaktfolge (HT) der mit einer Wertstufenzahl multiplizierten Impulsfolgefrequenz der weiteren Hilfstaktfolge (HTH) gleich sind, und wobei die Wertstufenzahl durch die Anzahl der verschiedenen Werte bestimmt ist, die das Phasenwort (PW) annehmen kann, daß über eine Takt-Ein-Ausblendung (TEA) und einen nachgeschalteten Teiler (TR) aus der Hilfstaktfolge (HT) die plesiochrone Taktfolge (PT) erzeugt wird, daß in einem Phasenkomparator die Phasenlage der weiteren Hilfstaktfolge (HTH) mit der der plesiochronen Taktfolge (PT) verglichen wird, und daß bei einer Abweichung jeweils nur eine Impulsflanke mit der Takt-Ein-Ausblendung (TEA) ein- bzw. ausgeblendet wird.

## Claims

1. Method for recovering a plesiochronous data signal (PD) in a demultiplexing stage (DX) of a digital signal transmission apparatus, in which the received sum signal (SG), which was generated in a transmitting digital signal transmission apparatus employing so-called pulse stuffing, is divided in a demultiplexer (DM) into a synchronous data signal (SD) and an additional data signal (ZD), in which, on the basis of stuffing information transmitted in the additional data signal (ZD), a data bit (DB) likewise transmitted in the additional data signal (ZD) is, in a format converter (FW), inserted into the synchronous data signal (SD) or one bit is extracted from the synchronous data signal (SD), and in which a plesiochronous clock sequence (PT) is formed in a clock recovery stage (TRS), with which the plesiochronous data signal (PD) is read out of the format converter (FW), characterised in that the stuffing information is composed exclusively of phase words (PW) which contain in digital form the instantaneous phase relationship between the sum signal (SG) and the plesiochronous data signal (PD), the repetition frequency of the phase words (PW), given fine value gradation in the sum signal (SG), being selected to be of such a magnitude that two successive phase words (PW) can differ at most in the least significant bit, in that the phase words (PW) are evaluated in a command evaluation stage (KAS), the command evaluation stage (KAS) outputting control signals to the format converter (FW) when the extreme values of the phase words (PW) are exceeded, as a result of which bits are inserted into the synchronous data signal (SD) or extracted from the synchronous data signal (SD), in that the most significant bit of the phase word (PW) is transmitted several times, in that an evaluation stage (BW) is provided in the command evaluation stage (KAS) which outputs a potential corresponding to the majority of the most significant bits of the phase word (PW), in that the output potential of the evaluation stage (BW) is integrated over a plurality of phase words (PW), and a first criterion is fulfilled when a predetermined value is reached, in that exceeding an extreme value, as well as exceeding a mean value, of the phase word (PW) is evaluated over all bits of the phase word (PW), a further criterion being fulfilled when a transition is detected, in that a third criterion is fulfilled when, before an extreme value or a mean value is exceeded, it was detected that a mean value or an extreme value of the phase word (PW) was exceeded in each case, and in that when all three criteria are fulfilled the switchover potential (UP) is set to the value corresponding to the transition of the phase word (PW).

2. Method according to Claim 1, characterised in that, as switchover potential (UP), the output potential of the evaluation stage (BW) represents one of the control signals used for inserting or extracting bits into or from the synchronous data signal (SD).

3. Method according to Claim 1 or 2, characterised in that a normal data signal and a data signal delayed by half a bit are generated in the format converter (FW) from the synchronous data signal (SD), the insertion or extraction of bits into or from the synchronous data signal (SD) being effected by switching over between the two data signals at the extreme values of the phase word (PW), the logic states of the switchover potential (UP) corresponding to the normal or to the delayed data signal in each case.

4. Method according to one of the preceding claims, characterised in that a further auxiliary clock sequence (HTH) is generated in the clock recovery stage (TRS) from an auxiliary clock sequence (HT) output by the demultiplexer (DM) using a programmable divider stage (PS), the pulse repetition frequencies of the further auxiliary clock sequence (HTH) and the plesiochronous clock sequence (PT) being identical to one another and the pulse repetition frequency of the auxiliary clock sequence (HT) being identical to the pulse repetition frequency of the further auxiliary clock sequence (HTH) multiplied by a value gradation number, and the value gradation number being determined by the number of different values which the phase word (PW) can assume, in that the plesiochronous clock sequence (PT) is generated from the auxiliary clock sequence (HT) via a pulse insertion/extraction circuit (TEA) and a downstream divider (TR), in that the phase relation of the further auxiliary clock sequence (HTH) is compared with that of the plesiochronous clock sequence (PT) in a phase comparator, and in that insertion or extraction is carried out with the pulse insertion/extraction circuit (TEA) in the event of a deviation of only one pulse edge in each case.

## Revendications

1. Procédé pour récupérer un signal plésiochrone de données (PD) dans un étage de démultipléxage (DX) d'un appareil de transmissions signaux de données, dans lequel, dans un démultiplixeur (DM) ? le signal somme (SG) reçu qui a été produit dans un appareil de transmission émetteur de signaux numériques avec mise en oeuvre de ce que l'on désigne par "Puls-Stupping" (bourrage d'impulsions), est décomposé en un signal de données synchrone (SD) et en un signal de données additionnel (ZD), dans lequel, dans un transformateur ou convertisseur de format (FW) et en raison d'une information de bourrage transmise dans le signal de données additionnel, un bit de donnée (DB) également transmis dans le signal de données additionnel (ZD), est inséré dans le signal de données synchrone (SD) ou un bit est enlevé du signal de données synchrone (SD), et dans lequel on forme, dans un étage de récupération de la cadence (TRS), un train de cadence plésiochrone (PT) à l'aide duquel le signal de données plésiochrone (PD) est extrait du convertisseur de format (FW), caractérisé par le fait que l'information de bourrage est constituée exclusivement par des mots de phase (PW) qui contiennent, sous une forme numérique, la relation de phase instantanée entre le signal somme (SG) et le signal de données plésiochrone (PD), la fréquence de répétition des mots de phase (PW) étant choisie, dans le cas d'un étalement fin des valeurs du signal somme (SG) à une valeur tellement élevée que deux mots de phase (PW) qui se suivent peuvent se différencier, au plus, par le bit de plus faible poids, que dans un étage d'évaluation de commande (KAS) les mots de phase (PW) sont évalués, l'étage d'évaluation de commande (KAS) émettant, lors du dépassement des valeurs extrêmes des mots de phase (PW), des signaux de commande pour le convertisseur de format (FW), à l'aide desquels des bits sont insérés dans le signal de données synchrone (SD) ou sont enlevés du signal de données synchrone (SD), que le bit, de poids le plus élevé, du mot de phase (PW), est transmis à plusieurs reprises, qu'il est prévu, dans l'étage d'évaluation de commande (KAS), un étage de pondération qui émet un potentiel qui correspond à la majorité des bits de poids le plus élevé du mot de phase, que le potentiel de sortie de l'étage de pondération (BW) est intégré sur plusieurs mots de phase et qu'un premier critère est satisfait lorsque ce potentiel a atteint une valeur prédéterminée, qu'un dépassement d'une valeur extrême, de même que le dépassement d'une valeur moyenne du mot de phase (PW) au delà de tous les bits du mot de phase (PW), est évalué, la constation d'un dépassement satisfaisant un second critère, qu'un troisième critère est satisfait lorsqu'avant un dépassement d'une valeur extrême ou d'une valeur moyenne le dépassement d'une valeur moyenne extrême du mot de phase (PW) a été reconnu et que lorsque les trois critères on été satisfait, le potentiel de commutation (UP) est placé à la valeur qui correspond au passage du mot de phase (PW).

2. Procédé selon la revendication 1, caractérisé par le fait que le potentiel de sortie de l'étage de pondération (BW) représente, en tant que potentiel de commutation (UP) d'un des signaux de commande, et qui est utilisé et pour insérer ou pour enlever des bits du signal de données synchrone (SD).

3. Procédé selon la revendication 1 ou 2, caractérisé par le fait qu'à partir du signal de données synchrone (SD) on produit, dans le convertisseur de format (FW) un signal de données normal et un signal de données qui est retardé d'un demi bit, étant noté que l'insertion ou l'enlèvement de bits dans le signal de données synchrone (SD) est provoqué par la commutation entre les deux signaux de données pour des valeurs extrêmes du mot de phase (PW), alors que les états logiques du potentiel de commutation (UP) correspondent respectivement au signal de données normal ou au signal de données retardé.

4. Procédé selon l'une des revendications précédentes, caractérisé par le fait que dans l'étage de récupération de la cadence (TRS) on produit, à partir d'un train de cadence auxiliaire (HT) fournit par le démultiplixateur (DM), et par l'intermédiaire d'un étage diviseur programmable (PS), un second train de cadence auxiliaire (HTH), étant noté que la fréquence de répétition des impulsions du second train de cadence auxiliaire (HTH) et du train de cadence plésiochrone (PT) sont identiques et que la fréquence de répétition des impulsions du train de cadence auxiliaire (HT) de la fréquence de répétition des impulsions du second train de cadence auxiliaire (HTH), qui est multiplié par un nombre d'étages de valeurs, est égale au second train de cadence auxiliaire (HTH) alors que le nombre d'étages de valeurs ou de pondérations est déterminé par le nombre des différentes valeurs que peut prendre le mot de phase (PW), que par l'intermédiaire d'un dispositif d'introduction ou d'enlèvement de cadence (TEA) et par l'intermédiaire d'un diviseur aval, on produit, à partir du train de cadence auxiliaire (HT), le train de cadence plésiochrone (PT), et que dans le cas d'un écart on introduit ou on enlève à l'aide du dispositif d'introduction ou d'enlèvement de cadence (TEA), seulement en flanc d'impulsion.

# FIG 1

EP 0 241 777 B1

FIG 2

KAS

# FIG 3

| PW | PB4 $2^3$ | PB4 $2^3$ | ZD PB4 $2^3$ | PB3 $2^2$ | PB2 $2^1$ | PB1 $2^0$ | MPB4 A(BW) | PB3 $\oplus$ MPB4 (XO1) | UP |
|---|---|---|---|---|---|---|---|---|---|
| 10 | 1 | 1 | 1 | 0(1) | 1(0) | 0(1) | 1 | 1 | |
| 11 | 1 | 1 | 1 | 0(1) | 1(0) | 1(0) | 1 | 1 | |
| 12 | 1 | 1 | 1 | 1 | 0 | 0 | 1 | 0 | N ≙ 1 |
| 13 | 1 | 1 | 1 | 1 | 0 | 1 | 1 | 0 | |
| 14 | 1 | 1 | 1 | 1 | 1 | 0 | 1 | 0 | |
| 15 | 1 | 1 | 1 | 1 | 1 | 1 | 1 | 0 | Löschen |
| 0 | 0 | 0 | 0 | 0 | 0 | 0 | 0 | 0 | Stopfen |
| 1 | 0 | 0 | 0 | 0 | 0 | 1 | 0 | 0 | |
| 2 | 0 | 0 | 0 | 0 | 1 | 0 | 0 | 0 | |
| 3 | 0 | 0 | 0 | 0 | 1 | 1 | 0 | 0 | |
| 4 | 0 | 0 | 0 | 1(0) | 0(1) | 0(1) | 0 | 1 | V ≙ 0 |
| 5 | 0 | 0 | 0 | 1(0) | 0(1) | 1(0) | 0 | 1 | |
| 6 | 0 | 0 | 0 | 1(0) | 1(0) | 0(1) | 0 | 1 | |
| 7 | 0 | 0 | 0 | 1(0) | 1(0) | 1(0) | 0 | 1 | |
| 8 | 1 | 1 | 1 | 0(1) | 0(1) | 0(1) | 1 | 1 | N ≙ 1 |
| | 1 | 1 | 1 | 0(1) | 0(1) | 1(0) | 1 | 1 | |

(geänderte Bits am Takteingang des zweiten Zählers Z2)

16

# FIG 4

EP 0 241 777 B1

|  | 2 | 3 | 4 | 5 | 6 | | | 7 | 8 | 9 | 10 | 11 | 12 | 13 | 14 |
|---|---|---|---|---|---|---|---|---|---|---|---|---|---|---|---|
|  |  | PB3⊕MPB4 | | | Z2 | | | | | | | | UP | UP | |
|  | MPB4 | Q(F1)↓ | Q(F2)↓ | Q(F2) | Q1 | Q2 | Q3 | Q(F3)↓ | Q(F4)↓ | Q(F4)↓ | Q(F5)↓ | Q(F5)↓ | Q(F6)↓ | Q(F6)↓ | SS |
|  | A(BW) | | | | | | | | | | | | | | |
| 10 | 1 | 1 | 0 | 1(D) | 1 | 0 | 1 | 1 | 1 | 1 | 1 | 1 | 1(D) | 1(D) | |
| 11 | 1 | 1 | 0 | 0 | 0 | 0 | 1 | 1 | 1 | 1 | 1 | 1 | 1 " | 1 " | |
| 12 | 1 | 0 | 0 | 0 | 0 | 0 | 1 | 1 | 1 | 1 | 1 | 1 | 1 " | 1 " | |
| 13 | 1 | 0 | 1(D) | 0 | 1 | 0 | 1 | 1 | 1 | 1 | 1 | 1 | 1 " | 1 " | |
| 14 | 1 | 0 | 1 | 0 | 1 | 0 | 1 | 1 | 1 | 1 | 1 | 1 | 1 " | 1 " | |
| 15 | 1 | 0 | ① | 0(R) | 0 | 1 | ① | ① | 1 | ⓪ | 1 | 1 | 1 " | 1(S) | |
| 0 | 0 | 0 | 1(S) | ⓪ | 0 | 0 | ⓪ | ⓪ | 1 | 1 | ⓪ | 1 | 0(R) | 0(D) | |
| 1 | 0 | 0 | 1 | 0 | 1 | 0 | 0 | 0 | 1 | 1 | 1 | 1 | 0(D) | 0 " | |
| 2 | 0 | 0 | 1 | 0(D) | 1 | 0 | 0 | 0 | 1 | 1 | 1 | 1 | 0 " | 0 " | |
| 3 | 0 | 0 | 1 | 1 | 0 | 1 | 0 | 0 | 1 | 1 | 1 | 1 | 0 " | 0 " | |
| 4 | 0 | 1 | 1 | 1 | 0 | 1 | 0 | 0 | 1 | 1 | 1 | 1 | 0 " | 0 " | |
| 5 | 0 | 1 | 0(D) | 1 | 1 | 0 | 0 | 0 | 1 | 1 | 1 | 1 | 0 " | 0 " | |
| 6 | 0 | 1 | 0 | 1 | 1 | 0 | 0 | 0 | 1 | 1 | 1 | 1 | 0 " | 0 " | |
| 7 | 0 | 1 | ⓪ | 1(S) | 0 | 0 | ⓪ | ⓪ | 1 | 1 | 1 | ⓪ | 0 " | 0(R) | |
| 8 | 1 | 1 | 0(R) | ① | 0 | 1 | ① | ① | ⓪ | 1 | 1 | 1 | 1 (S) | 1(D) | |
| 9 | 1 | 1 | 0 | 1 | 1 | 0 | 1 | 1 | 1 | 1 | 1 | 1 | 1 (D) | 1 " | |

$$\begin{array}{c}7\uparrow 15\downarrow\\ 8\uparrow 0\downarrow\end{array}\quad Q_{t_{n+1}}(F5) = Q_{t_n}(F2) \cdot \overline{Q3}_{t_{n+1}} \cdot Q_{t_n}(F3)$$

$$\begin{array}{c}7\downarrow 15\uparrow\\ 8\downarrow 0\uparrow\end{array}\quad Q_{t_{n+1}}(F4) = \overline{Q}_{t_n}(F2) \cdot Q3_{t_{n+1}} \cdot \overline{Q}_{t_n}(F3)$$

# FIG 5

| DB | PB1 | PB2 | PB3 | SB | PB4 | PB4 | PB4 | DB |
|----|-----|-----|-----|-----|-----|-----|-----|-----|
| | $2^0$ | $2^1$ | $2^2$ | "1" | $2^3$ | $2^3$ | $2^3$ | |

ZD

T1 ⎍⎍⎍⎍⎍⎍⎍⎍⎍⎍⎍ (128 kHz)

T2 (16 kHz)

RT (16 kHz)

T3 (32 kHz)

# FIG 6

HT

HT / 16
≙ HTH
mit PW = 0

HTH
mit PW = 1

HTH
mit PW = 2

HTH
mit PW = 8

HTH
mit PW = 16 = 0